# FASCICULE DE BREVET EUROPEEN

(11) **EP 2 239 605 B1**
(45) Date de publication et mention de la délivrance du brevet: **04.07.2012**
(21) Numéro de dépôt: 10159185.7
(22) Date de dépôt: 07.04.2010
(51) Int. Cl.: G02B 6/38, G02B 6/42

(54) **Système d'interconnexion de modules opto-électroniques et de fibres optiques**
Verbindungssystem für opto-elektronische Module und Glasfasern
Interconnection system for opto-electronic modules and optical fibers

(30) Priorité: 08.04.2009 FR 0952295
(43) Date de publication de la demande: 13.10.2010
(73) Titulaire: RADIALL, 93116 Rosny-Sous-Bois (FR)
(72) Inventeur: Alcaraz, Franck, 38000, Grenoble (FR); Durand, Renaud, 38100, Grenoble (FR)
(74) Mandataire: Leszczynski, André

(56) Documents cités:
- EP-A- 0 207 449
- WO-A1-2009/100796
- NL-C2- 1 003 148
- US-A- 5 031 981
- US-A- 5 138 679
- US-A- 5 271 080
- US-A- 5 784 513
- US-A1- 2006 093 281
- US-A1- 2007 036 487
- US-A1- 2007 036 489
- US-A1- 2008 050 070
- US-A1- 2008 175 541

## Description

La présente invention a pour objet un système de connexion et les composants d'un tel système.

L'invention s'applique plus particulièrement à la réalisation d'un connecteur pour des applications Ethernet en environnement sévère externe.

Il est connu, par exemple des brevets US 7 338 214 et US 7 281 856, de réaliser des fiches de connecteurs optiques comportant des contacts optiques LC reçus dans un support assurant leur intégration et leur maintien à l'intérieur de la fiche.

Le recours à un tel support peut nécessiter l'emploi d'outillage spécifique et compliquer le câblage par un installateur. Par ailleurs, la partie arrière d'un contact LC n'étant pas normalisée, elle peut différer d'un produit à un autre et nécessiter un support spécifique, ce qui peut limiter la possibilité pour un installateur d'utiliser différentes références de contacts LC et empêcher également la possibilité pour cet installateur de reprendre des cordons existants.

Par ailleurs, il est connu, par exemple de la demande US 2007/0036489, de placer un convertisseur optoélectronique, encore appelé *transceiver* en anglais, monté sur un support, dans une embase fixée sur le panneau d'un équipement client et de raccorder par un câble le support au circuit imprimé de l'équipement client.

L'emploi d'un tel câble raccordant le circuit imprimé de l'équipement client et le convertisseur optoélectronique peut présenter des inconvénients tels que l'usage de pièces supplémentaires, l'augmentation du coût et une complexité accrue d'assemblage.

Il existe un besoin pour remédier aux inconvénients précités et l'invention y parvient, selon l'un de ses aspects, grâce à une fiche comportant :
- au moins un contact relié à un câble,
- un corps à l'intérieur duquel sont reçus le ou les contacts et,
- un presse-étoupe maintenant la fiche sur le câble,
caractérisée par le fait que le ou les contacts sont reçus de façon flottante à l'intérieur du corps, par le fait que le corps s'étend avantageusement selon un axe longitudinal et par le fait que le corps comporte une partie médiane en porte-à-faux et une partie avant tubulaire s'étendant au-delà de la partie médiane autour de l'axe longitudinal.

Le ou les contacts sont reçus de façon flottante à l'intérieur du corps, c'est-à-dire que le corps est avantageusement dépourvu de pièce supportant ce ou ces contacts. Le ou les contacts optiques ne sont par exemple portés que par le câble, contrairement aux solutions proposées par les brevets US 7 281 856 et US 7 338 214, selon lesquelles les contacts sont portés par un support clipsé sur le corps.

L'invention, en évitant de recourir à un support du ou des contacts, permet d'utiliser tous types de cordons existants, sans qu'il soit nécessaire de prévoir un support spécifique à un type particulier de contact, ce qui permet par exemple un montage à partir de cordons déjà existants et sans outillage spécifique.

Les contacts peuvent être des contacts optiques ou des fiches de différentes natures comme par exemple des fiches RJ45 ou USB.

La partie médiane du corps en porte-à-faux est par exemple différente de deux poutres diamétralement opposées par rapport à l'axe longitudinal du corps.

Cette partie médiane est par exemple formée d'une ou plusieurs poutres regroupées dans une portion donnée du pourtour du corps. La ou les poutres sont par exemple regroupées dans un même secteur angulaire s'étendant sur moins de 180°, voire moins de 150°, voire moins de 120°, voire moins de 90°, voire moins de 60° autour de l'axe longitudinal du corps.

La partie médiane du corps est avantageusement constituée par une poutre unique.

La partie avant tubulaire du corps s'étend au-delà de la partie médiane autour de l'axe longitudinal, c'est-à-dire qu'elle fait angulairement saillie par rapport à la partie médiane dans au moins une direction. La partie avant tubulaire s'étend par exemple de part et d'autre de la partie médiane autour de l'axe longitudinal, par exemple sur plus de la moitié du pourtour du corps.

La partie avant tubulaire du corps est avantageusement ouverte sur au moins une partie de son pourtour.

Une partie médiane et une partie avant selon l'invention permettent par exemple le passage aisé des contacts à l'intérieur du corps et un accès facile aux contacts pour un installateur lors des opérations de connexion de ces derniers à une embase, par exemple.

La partie avant tubulaire du corps comporte avantageusement au moins un ergot ménagé sur sa surface extérieure. La partie avant tubulaire du corps comporte par exemple deux ergots, ces ergots étant par exemple diamétralement opposés sur la partie avant du corps.

Le corps comporte encore avantageusement une partie arrière tubulaire sur laquelle est monté le presse-étoupe.

Le presse-étoupe comporte avantageusement des moyens permettant de réaliser une liaison mécanique et étanche entre la fiche et le câble, tout en assurant un accompagnement du câble en flexion.

Le presse-étoupe comporte par exemple au moins un joint annulaire s'appliquant contre le câble.

Le presse-étoupe comporte par exemple deux demi-éléments de maintien sur le câble et un élément de serrage des demi-éléments.

Le presse-étoupe comporte par exemple un écrou comprenant une partie avant destinée à être montée sur la partie arrière du corps et une partie arrière flexible, comprenant par exemple une structure hélicoïdale, cette partie arrière flexible permettant un accompagnement du câble en flexion.

La fiche comporte avantageusement un bouchon entourant extérieurement le corps, ce bouchon permettant de protéger le corps et les contacts de l'environnement extérieur.

Le bouchon comporte avantageusement au moins un ergot ménagé sur sa surface intérieure. Le bouchon comporte par exemple deux ergots, ces ergots étant par exemple diamétralement opposés sur le bouchon.

L'invention à encore pour objet, selon un autre de ses aspects, un ensemble comportant :
- une embase comportant une partie tubulaire et une platine de fixation sur un panneau et,
- un équipement client comportant un boîtier comportant au moins un logement pour recevoir au moins un contact lorsque l'embase est accouplée à une fiche, notamment à une fiche telle que définie ci-dessus,
caractérisé par le fait que le boîtier est reçu de façon flottante à l'intérieur de la partie tubulaire de l'embase et par le fait que la partie tubulaire de l'embase comporte au moins une rainure courbée.

La rainure courbée est avantageusement ménagée sur toute l'épaisseur de la partie tubulaire de l'embase. La rainure courbée ne s'étend avantageusement que sur une partie du pourtour de la partie tubulaire.

Le boîtier comportant les logements recevant les contacts n'est avantageusement pas directement fixé à l'embase mais intégré à l'équipement client.

Le boîtier est reçu de façon flottante à l'intérieur de la partie tubulaire de l'embase, c'est-à-dire que l'embase est avantageusement dépourvue de pièce supportant le boîtier.

Les logements peuvent recevoir des contacts optiques, RJ45 ou encore USB.

L'équipement client comporte par exemple un châssis, un convertisseur optoélectronique et une carte de circuit imprimé pouvant par exemple constituer une tête d'antenne déportée pour le marché des télécommunications.

Le boîtier fait par exemple partie du convertisseur optoélectronique. Le convertisseur optoélectronique peut alors être reçu de façon flottante à l'intérieur de la partie tubulaire de l'embase, l'embase étant avantageusement dépourvue de pièce supportant ce convertisseur optoélectronique.

Le convertisseur optoélectronique n'est par exemple maintenu à l'intérieur de l'embase que par le circuit imprimé de l'équipement client, ce qui peut permettre de disposer au niveau de l'embase d'un environnement peu encombré facilitant le montage, contrairement à la solution connue par exemple de la demande US 2007/0036489 selon laquelle le convertisseur optoélectronique est porté par l'embase.

L'invention peut permettre de venir connecter une fiche au convertisseur optoélectronique intégré à l'équipement client et monté directement sur le circuit imprimé de l'équipement client, sans câble de raccordement.

L'embase comporte avantageusement au moins un joint annulaire placé dans un logement ménagé sur la surface extérieure de la partie tubulaire et au moins un joint annulaire placé dans un logement ménagé sur la surface intérieure de la partie tubulaire.

La partie tubulaire de l'embase comporte par exemple deux rainures courbées, agencées pour coopérer avec les ergots d'une fiche tel que définie ci-dessus lors de l'accouplement de l'embase et de la fiche pour réaliser une liaison à double baïonnette entre l'embase et la fiche.

Du fait de la présence des deux joints au niveau de l'embase, la liaison à double baïonnette peut permettre d'obtenir un verrouillage étanche de la connexion entre fiche et embase. En outre, cette liaison à double baïonnette peut conférer au système de connexion obtenu une meilleure tenue aux sollicitations mécaniques extérieures.

L'invention a encore pour objet, selon un autre de ses aspects un système de connexion comportant :
- une fiche comportant au moins un contact relié à un câble, un corps à l'intérieur duquel sont reçus le ou les contacts, un presse-étoupe maintenant la fiche sur le câble et un bouchon entourant extérieurement le corps, et
- une embase comportant une partie tubulaire et une platine de fixation sur un panneau d'un équipement client,
caractérisé par le fait que le fait que le corps et le bouchon de la fiche comportent chacun au moins un ergot et par le fait que la partie tubulaire de l'embase comporte au moins une rainure courbée agencée pour recevoir simultanément l'ergot du corps et l'ergot du bouchon.

L'ergot du bouchon vient par exemple bloquer l'ergot du corps lorsque ces deux ergots sont reçus dans la rainure.

Les ergots de la fiche et la rainure courbée de l'embase permettent avantageusement de réaliser une liaison à double baïonnette entre la fiche et l'embase.

Le corps comporte avantageusement deux ergots, le bouchon comporte avantageusement deux ergots et la partie tubulaire de l'embase comporte avantageusement deux rainures courbées, chaque rainure courbée étant agencée pour recevoir simultanément un ergot du corps et un ergot du bouchon.

L'invention a encore pour objet, selon un autre de ses aspects, une fiche de connecteur comportant :
- au moins un contact relié à un câble,
- un corps s'étendant selon un axe longitudinal et à l'intérieur duquel sont reçus le ou les contacts et,
- un presse-étoupe maintenant la fiche sur le câble,
caractérisée par le fait que le corps comporte une partie médiane constituée par une unique poutre.

Une telle fiche présente avantageusement une surface latérale ajourée permettant un accès aux contacts depuis l'extérieur, cette surface latérale ajourée étant ménagée de part et d'autre de la poutre de la partie médiane et par une ou plusieurs ouvertures ménagées sur la surface latérale d'une partie avant du corps.

D'autres avantages et caractéristiques de l'invention apparaîtront à la lecture de la description qui suit d'un exemple de réalisation non limitatif, en se référant au dessin annexé dans lequel:
- la figure 1 est une vue en perspective d'un exemple de mise en oeuvre de l'invention,
- la figure 2 est une vue éclatée d'une fiche selon un exemple de mise en oeuvre de l'invention,
- la figure 3 est une vue en perspective d'un ensemble comprenant une embase et un équipement client selon un exemple de mise en oeuvre de l'invention,
- la figure 4 est une vue en coupe de l'ensemble représenté à la figure 3 et,
- les figures 5 et 6 représentent deux étapes lors d'un procédé d'accouplement d'une fiche selon la figure 2 à une embase selon la figure 3.

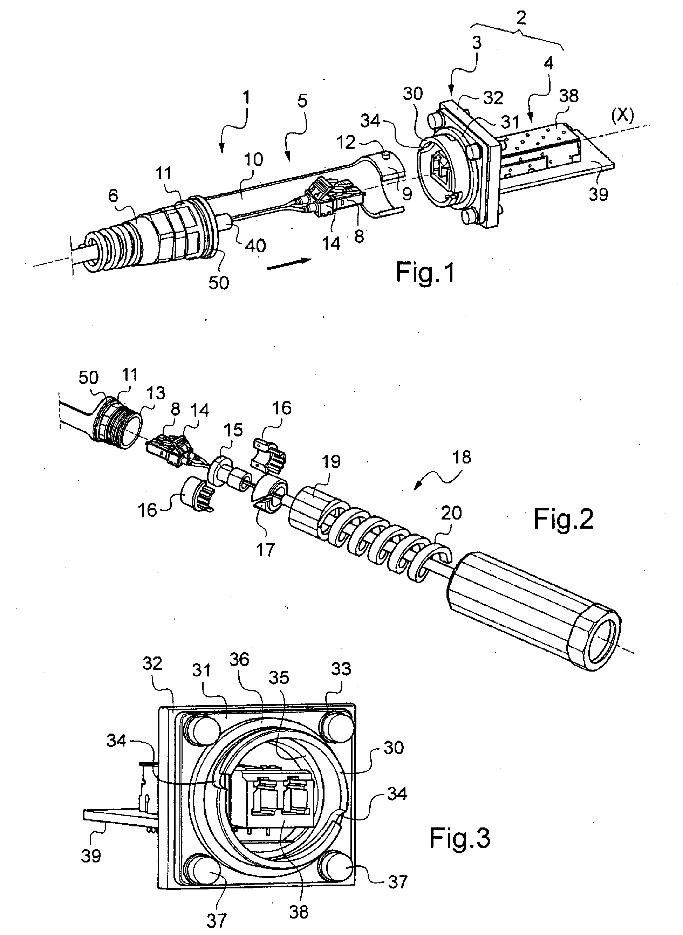

On a représenté à la figure 1 une fiche désignée globalement par 1 et un ensemble désigné globalement par 2, comprenant une embase désignée globalement par 3 et un équipement client désigné globalement par 4.

La fiche 1 et l'embase 3 sont agencées pour être accouplées l'une à l'autre pour réaliser un système de connexion.

La fiche 1 comporte dans l'exemple décrit un corps 5, un presse-étoupe 6, un bouchon 7 et des contacts 8.

Dans l'exemple décrit, les contacts 8 sont des contacts optiques, par exemple des contacts optiques LC duplex, mais l'invention n'est pas limitée à un type particulier de contact.

Dans des variantes, les contacts sont des contacts RJ45 ou USB.

Comme on peut le voir sur les figures 1 et 2, les contacts optiques 8 sont reçus à l'intérieur du corps 5 et une extrémité de ces contacts optiques 8 est reliée à un câble optique 40.

Dans l'exemple décrit deux contacts optiques 8 sont montés sur le câble optique 40 mais l'invention n'est pas limitée à un nombre particulier de contacts.

Les contacts optiques 8 sont par exemple maintenus ensemble par un bracelet ou clip plastique 14.

Le corps 5 s'étend dans l'exemple décrit selon un axe longitudinal X et comporte une partie avant tubulaire 9, une partie médiane 10 et une partie arrière tubulaire 11. Le corps 5 est dans l'exemple décrit monobloc.

Le corps 5 est par exemple réalisé en laiton ou en aluminium usiné. En variante le corps 5 est réalisé par injection, étant par exemple en métal injecté, en plastique injecté, notamment en plastique métallisé comprenant par exemple des fibres inox, ce qui peut permettre d'obtenir une meilleure protection contre les interférences électromagnétiques.

Comme on peut le voir sur la figure 1, la partie avant 9 est ouverte sur une portion de son pourtour et comporte, sur sa surface extérieure, deux ergots 12 dont le rôle sera décrit par la suite et qui sont par exemple diamétralement opposés.

La partie médiane 10 est par exemple constituée d'une unique poutre ne s'étendant que sur une partie du pourtour du corps 5, de sorte que la surface latérale du corps 5 au niveau de la partie médiane 10 est largement ajourée et accessible depuis l'extérieur.

L'invention n'est pas limitée à un nombre particulier de poutres, la partie médiane pouvant être constituée de deux poutres par exemple, ces deux poutres ménageant entre-elles une surface ajourée accessible depuis l'extérieur.

La partie avant tubulaire 9 peut, comme représenté à la figure 1, s'étendre autour de l'axe X de part et d'autre de la ou des poutres de la partie médiane 10.

La partie arrière 11 s'étend sur tout le pourtour du corps et comporte, comme on peut le voir sur la figure 2, un filetage 13 sur sa surface extérieure ainsi qu'un joint annulaire 50 s'étendant sur tout le pourtour de sa surface extérieure.

Comme on peut le voir, le corps 5 peut être dépourvu de tout support maintenant les contacts optiques 8, de sorte que ces derniers ne sont portés que par le câble optique 40.

On va maintenant décrire en référence à la figure 2 un presse-étoupe 6 selon un exemple de mise en oeuvre de l'invention. Le presse-étoupe 6 comporte par exemple un joint fendu 15, par exemple réalisé en silicone, assurant une liaison étanche avec le câble optique 40, et par exemple deux demi-éléments 16 de maintien du presse-étoupe 6 sur le câble optique 40, qui peuvent être réalisés en matière plastique.

Le presse-étoupe peut encore comporter un cône de serrage fendu 17, destiné à maintenir les deux demi-éléments 16 fermés sur le câble optique 40.

Le presse-étoupe 6 peut encore comporter un écrou 18, par exemple réalisé en matière plastique, comportant une partie avant 19 présentant un filetage intérieur destiné à coopérer avec le filetage 13 de la partie arrière 11 du corps 5 et une partie arrière 20 se présentant sur la forme d'une structure flexible. Dans l'exemple décrit, cette structure flexible est de forme hélicoïdale, étant encore appelée queue de cochon.

L'écrou 18 et les demi-éléments de maintien 16 présentent par exemple des diamètres différents, cette différence pouvant être compensée par l'interposition du cône de serrage fendu 17.

L'invention n'est pas limitée à une fiche comportant un presse-étoupe tel que décrit ci-dessus. La fiche peut comporter tout type de presse-étoupe.

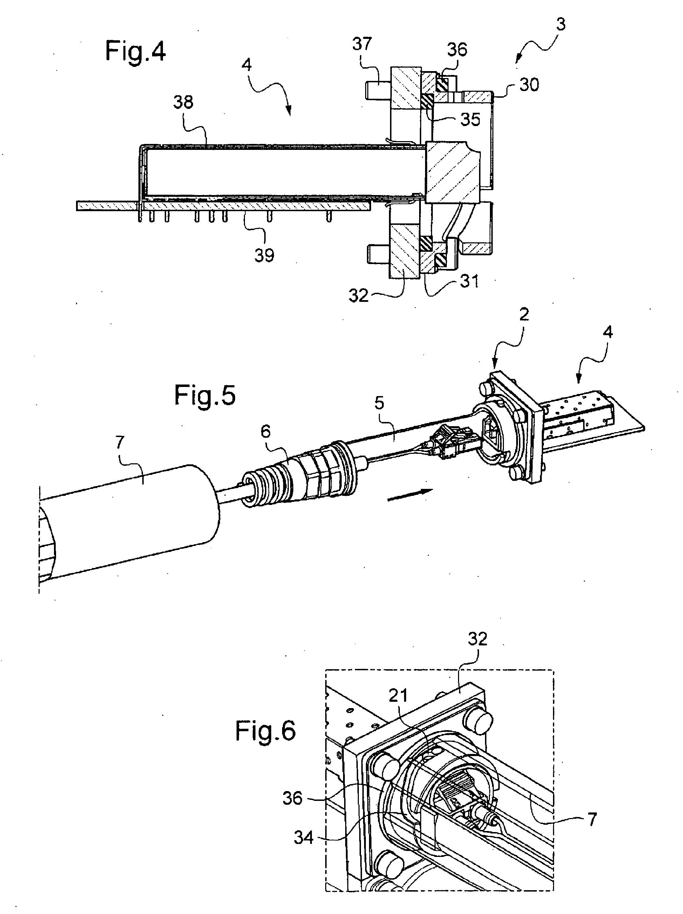

Le bouchon 7 est dans l'exemple décrit de forme tubulaire et comporte sur sa surface intérieure à son extrémité avant deux ergots 21 visibles à la figure 6 et dont le rôle sera décrit par la suite. Le bouchon 7 est par exemple réalisé en laiton ou en aluminium usiné. En variante le bouchon 7 est réalisé par injection, étant par exemple en métal injecté, en plastique injecté, notamment en plastique métallisé comprenant par exemple des fibres inox, ce qui peut permettre d'obtenir une meilleure protection contre les interférences électromagnétiques.

On va maintenant décrire un exemple d'assemblage d'une fiche 1 telle que décrite ci-dessus.

On introduit le joint 15 au niveau d'une partie du câble optique 40.

On introduit sur la même partie du câble optique 40 le cône de serrage fendu 17.

On place par ailleurs les deux demi-éléments de maintien 16 de par et d'autre du câble optique 40 et on fait coulisser le cône 17 jusqu'à ce qu'il maintienne les deux demi-éléments 16 sur le câble optique 40.

Lors d'une opération ultérieure, on visse l'écrou 18 sur la partie arrière 11 du corps 5.

On va maintenant décrire en référence aux figures 3 et 4 un exemple d'ensemble 2 selon l'invention.

L'embase 3 comporte une partie tubulaire 30 et une platine de fixation 31 à un panneau 32. Dans l'exemple illustré, l'embase 3 est monobloc.

La platine 31 est par exemple de forme carrée ou rectangulaire et comporte à ses quatre coins des ouvertures 33 permettant le passage de vis 37 permettant de fixer l'embase 3 sur le panneau 32. L'invention n'est bien entendu pas limitée à une forme particulière de platine et à un nombre particulier d'ouvertures 33 pour le passage des vis 37.

La partie tubulaire 31 comporte dans l'exemple décrit deux rainures courbées 34, qui sont par exemple disposées de façon diamétralement opposées sur le pourtour de la partie tubulaire 30. Chaque rainure 34 est par exemple ménagée sur toute l'épaisseur de la partie tubulaire 30 et s'étend sur une partie seulement du pourtour de la partie tubulaire 30.

Deux joints annulaires 35 et 36 sont respectivement disposés contre la surface intérieure et contre la surface extérieure de la partie tubulaire 30, ces joints étant reçus dans des logements ménagés sur lesdites surfaces. Le joint 35 permet d'assurer l'étanchéité avec le panneau 32.

Comme on peut le voir sur la figure 3, l'équipement client 4 peut comporter un convertisseur optoélectronique 38 et une carte de circuit imprimé 39, le convertisseur optoélectronique 38 comportant par exemple une portion reçue dans l'ouverture ménagée dans la partie tubulaire 30, sans être supportée par l'embase 3.

Le convertisseur optoélectronique 38 est dans l'exemple décrit porté par le circuit imprimé 39, étant monté directement sur ce circuit imprimé 39, sans l'intermédiaire d'un câble de raccordement.

On va maintenant décrire en référence aux figures 5 et 6 un exemple d'accouplement d'une fiche 1 telle que décrite ci-dessus à un ensemble 2 comprenant une embase 3 et un équipement client 4 tels que décrits ci-dessus.

Lors d'une étape représentée à la figure 5, le corps 5 est fixé sur la partie tubulaire 30 de l'embase 3 par coopération entre les ergots 12 et les rainures courbées 34. Le corps 5 vient alors en appui contre le joint 35, ce qui permet d'assurer une liaison étanche et élastique entre le corps 5 et l'embase 3.

Lors d'une étape ultérieure, l'utilisateur peut connecter les contacts optiques 8 au convertisseur optoélectronique 35 en accédant aux contacts au travers des surfaces latérales ajourées des parties avant 9 et médiane 10 du corps 5.

Cette connexion peut être effectuée sans désolidariser les deux contacts optiques 8, évitant ainsi d'avoir à retirer le bracelet 14.

Lors d'une étape ultérieure représentée à la figure 6, le bouchon 7 est solidarisé à l'embase 3 par coopération des ergots 21 avec les rainures courbées 34, de façon à réaliser une deuxième liaison baïonnette. Le bouchon 7 vient s'appliquer contre le joint 36, permettant d'assurer une liaison étanche et élastique entre le bouchon 7 et l'embase 3.

Les ergots 21 du bouchon viennent par exemple bloquer les ergots 12 de la partie avant 9 du corps 5.

Une fois monté sur l'embase 3, le bouchon peut comprimer le joint 50 disposé sur la partie arrière 11 du corps 5, participant à l'étanchéité de la connexion entre la fiche et l'embase.

L'invention n'est pas limitée aux exemples qui viennent d'être décrits.

L'invention permet de s'affranchir du type et de la marque du ou des contacts utilisés et propose un concept universel, fiable et ergonomique pour la réalisation d'un connecteur, sans nécessiter d'outillage spécifique.

L'expression « comportant un » doit être comprise comme étant synonyme de « comportant au moins un », sauf lorsque le contraire est spécifié.

## Revendications

1. Fiche (1) comportant :
- au moins un contact (8) relié à un câble (40),
- un corps (5) à l'intérieur duquel sont reçus le ou les contacts (8), et
- un presse-étoupe (6) maintenant la fiche (1) sur le câble (40), le ou les contacts (8) étant reçus de façon flottante à l'intérieur du corps (5), le corps (5) s'étendant selon un axe longitudinal (X) **caractérisé par le fait que** le corps (5) comporte une partie médiane (10) en porte-à-faux et une partie avant tubulaire (9) s'étendant autour de l'axe longitudinal (X) au-delà de la partie médiane (10).

2. Fiche selon la revendication 1, **caractérisée par le fait que** le corps comporte une partie arrière tubulaire (11) sur laquelle est monté le presse-étoupe (6),

3. Fiche selon la revendication 1 ou 2, **caractérisée par le fait que** la partie médiane (10) du corps est constituée par une poutre unique.

4. Fiche selon l'une quelconque des revendications 1 à 3, **caractérisée par le fait que** la partie avant tubulaire (9) du corps est ouverte sur au moins une partie de son pourtour.

5. Fiche selon l'une quelconque des revendications 1 à 4, **caractérisée par le fait que** la partie avant tubulaire (9) du corps comporte au moins un ergot (12) ménagé sur sa surface extérieure.

6. Fiche selon l'une quelconque des revendications 1 à 5, **caractérisée par le fait que** le presse-étoupe (6) comporte un joint annulaire (15) s'appliquant contre le câble (40).

7. Fiche selon l'une quelconque des revendications 1 à 6, **caractérisée par le fait que** le presse-étoupe (6) comporte deux demi-éléments (16) de maintien sur le câble (40) et un élément (17) de serrage des demi-éléments.

8. Fiche selon l'une quelconque des revendications 2 à 7, **caractérisée par le fait que** le presse-étoupe (6) comporte un écrou (18) comprenant une partie avant (19) destinée à être montée sur la partie arrière (11) du corps et une partie arrière (20) flexible.

9. Fiche selon l'une quelconque des revendications 1 à 8, **caractérisée par le fait qu'**elle comporte un bouchon (7) entourant extérieurement le corps.

10. Fiche selon la revendication 9, **caractérisée par le fait que** le bouchon (7) comporte au moins un ergot (21) ménagé sur sa surface intérieure.

11. Fiche selon les revendications 1 à 10, **caractérisée par le fait que** les contacts (8) sont des contacts optiques.

12. Système de connexion comportant :
- une fiche (1) selon l'une quelconque des revendications 1 à 8,
- une embase (3) comportant une partie tubulaire (30) et une platine de fixation (31) sur un panneau (32) d'un équipement client,
**caractérisé par le fait que** l'embase (3) est dépourvue de pièce supportant le boîtier (38) et **par le fait que** la partie tubulaire (30) de l'embase comporte au moins une rainure courbée.

13. Système de connexion selon la revendication 12, **caractérisé par le fait que** l'embase (3) comporte un joint annulaire (36) placé dans un logement ménagé sur la surface extérieure de la partie tubulaire (30) et un joint annulaire (35) placé dans un logement ménagé sur la surface intérieure de la partie tubulaire (30).

14. Système de connexion comportant :
- une fiche (1) selon la revendication 9, et
- une embase (2) comportant une partie tubulaire (30) et une platine de fixation (31) sur un panneau (32) d'un équipement client,
**caractérisé par le fait que le fait que** le corps (5) et le bouchon (7) de la fiche (1) comportent chacun au moins un ergot (12, 21) et **par le fait que** la partie tubulaire (30) de l'embase (2) comporte au moins une rainure courbée (34) agencée pour recevoir simultanément l'ergot (12) du corps et l'ergot (21) du bouchon.

## Claims

1. A plug (1) comprising:
- at least one contact (8) connected to a cable (40);
- a body (5) within which the contact(s) (8) is/are received; and
- a gland (6) holding the plug (1) on the cable (40);
the contact(s) (8) being received in floating manner inside the body (5), the body (5) extending along a longitudinal axis (X), **characterizing by** the fact that the body (5) includes a cantilevered out middle portion (10) and a tubular front portion (9) extending around the longitudinal axis (X) beyond the middle portion (10).

2. A plug according to claim 1, **characterizing by** the fact that the body includes a tubular rear portion (11) on which the gland (6) is mounted.

3. A plug according to claim 1 or 2, **characterizing by** the fact that the middle portion (10) of the body constituted by a single beam.

4. A plug according to any one of claims 1 to 3, **characterizing by** the fact that the tubular front portion (9) of the body is open over at least a fraction of its periphery.

5. A plug according to any one of claims 1 to 4, **characterizing by** the fact that the tubular front portion (9) of the body includes at least one stud (12) provided on its outside surface.

6. A plug according to any one of claims 1 to 5, **characterizing by** the fact that the gland (6) comprises an annular gasket (15) bearing against the cable (40).

7. A plug according to any one of claims 1 to 6, **characterizing by** the fact that the gland (6) comprises two holder half-elements on the cable (40) and a clamping element (17) clamping the half-element.

8. A plug according to any one of claims 2 to 7, **characterizing by** the fact that the gland (6) comprises a nut (18) having a front portion (19) designed to be mounted on the rear portion (11) of the body, and a rear portion (20) that is flexible.

9. A plug according to any one of claims 1 to 8, **characterizing by** the fact at including a dust cap (7) surrounding the outside of the body.

10. A plug according to claim 9, the cap (7) includes at least one stud (21) formed on its inside surface.

11. plug according to any one of claims 1 to 10, **characterizing by** the fact that the contacts (8) are optical contacts.

12. A connection system comprising:
- a plug (1) according to any one of claims 1 to 8,
- a socket (3) comprising a tubular portion (30) and a plate (31) configured to be fastened to a panel (32) of client equipment,
**characterizing by** the fact that the socket is being lacking in any part at supports the casing (38) and by the fact that the tubular portion (30) of the socket includes at least one curved slot.

13. A connection system according to claim 12, **characterizing by** the fact that the socket (32) includes at least one annular gasket (36) disposed in a housing formed in the outside surface of the tubular portion (30), and at least one annular gasket (30) disposed in a housing formed in the inside surface of the tubular portion (30).

14. A connection system comprising:
- a plug (1) according to claim 9, and
- a socket (2) comprising a tubular portion (30) and a plate (31) configured to be fastened to a panel (32) of a piece of client equipment;
**characterizing by** the fact that each of the body (5) and the cap (7) of the plug (1) includes at least one stud (12, 21), and by the fact that the tubular portion (30) of the socket (2) includes at least one curved slot (34) configured to receive simultaneously the stud (12) of the and the stud (21) of the cap.

## Patentansprüche

1. Stecker (1) mit:
- wenigstens einem Kontakt (8), der mit Kabel (40) verbunden ist,
- einem Körper (5), in dessen Innerem der oder die Kontakte (8) aufgenommen sind, und
- einer Quetschmuffe (6), die den Stecker (1) an dem Kabel (40) hält,
wobei der oder die Kontakte (8) schwimmend im Inneren des Körpers (5) aufgenommen sind und der Körper (5) sich längs einer Längsachse (X) erstreckt, **dadurch gekennzeichnet, dass** der Körper (5) einen auskragenden Mittelteil (10) und einen rohrförmigen vorderen Teil (9) aufweist, der sich den Mittelteil (10) hinaus um die Längsachse (X) herum erstreckt.

2. Stecker nach Anspruch 1, **dadurch gekennzeichnet dass** der Körper einen rohrförmigen rückwärtigen Teil (11) aufweist, an dem die Quetschmuffe (6) montiert ist.

3. Stecker nach Anspruch 1 oder 2, **dadurch gekennzeichnet, dass** der Mittelteil (1) des Körpers durch einen einzigen Balken gebildet wird.

4. Stecker nach einem der Ansprüche 1 bis 3, **dadurch gekennzeichnet dass** der vordere rohrförmige Teil (9) des Körpers wenigstens auf einem Teil seines Umfangs offen ist.

5. Stecker nach einem der Ansprüche 1 bis 4, **dadurch gekennzeichnet, dass** der rohrförmige vordere Teil (9) des Körpers wenigstens einen Zapfen (12) aufweist, der auf seiner äußeren Oberfläche gebildet ist.

6. Stecker nach der Ansprüche 1 bis 5, **dadurch gekennzeichnet, dass** die Quetschmuffe (6) eine ringförmige Dichtung (15) aufweist, die sich an das Kabel (40) anlegt.

7. Stecker nach der Ansprüche 1 bis 6, **dadurch gekennzeichnet, dass** die Quetschmuffe (6) zwei Halbschalen (16) zum Halten des Kabels (40) und ein Element (17) zum Spannen der Halbschalen aufweist.

8. Stecker nach einem der ansprüche 2 bis 7, **dadurch gekennzeichnet, dass** die Quetschmuffe (6) eine Schraube (18), die die einen vorderen Teil (19) hat, der dazu bestimmt ist, auf dem rückwärtigen Teil (11) des Körpers montiert zu werden, sowie einen flexiblen rückwärtigen Teil (20) aufweist.

9. Stecker nach einem der Ansprüche 1 bis 8, **dadurch gekennzeichnet, dass** er einen Stopfen (7) aufweist, der den Körper außen umgibt.

10. Stecker nach Anspruch 9, **dadurch gekennzeichnet, dass** der stopfen (7) wenigstens einen Zapfen (21) aufweist, der an seiner inneren Oberfläche gebildet ist.

11. Stecker nach den Ansprüchen 1 bis 10, **dadurch gekennzeichnet, dass** die Kontakte (8) optische Kontakte sind.

12. Verbindungssystem mit:
- einem Stecker (1) nach der Ansprüche 1 bis 8,
- einem Sockel (3), der einen rohrförmigen Teil (30) und eine Platine (31) zur Befestigung an einer Platte (32) eines Kundengerätes aufweist,
**dadurch gekennzeichnet**, der Sockel (1) kein Teil aufweist, das das Gehäuse (38) hält, und dass der rohrförmige Teil (30) des Sockels wenigstens eine gekrümmte Nut ausweist.

13. Verbindungssystem nach Aspruch 12, **dadurch gekennzeichnet, dass** der Sockel (3) eine ringförmige Dichtung (36), die in eine Aufnahme eingesetzt ist, die an der äußeren Oberfläche des rohrförmigen Teils (30) gebildet ist, sowie eine ringförmige Dichtung (36) aufweist, die in eine Aufnahme eingesetzt ist, die an der inneren Oberfläche des rohrförmigen Teils (30) gebildet ist.

14. Verbindungssystem mit:
- einem Stecker nach Anspruch 9 und
- einem Socke (2), der einen rohrförmigen Teil (30) und eine Platine (31) zur Befestigung an einer Platte (32) eines Kundengerätes aufweist,
**dadurch gekennzeichnet, dass** der Körper (5) und der Stopfen (7) des steckers (1) je weils wenigstens einen Zapfen (12, 21) aufweisen und dass der rohrförmige Teil (30) des Sockels (2) wenigstens eine gekrümmte Nut (34) aufweist, die so ausgebildet ist, dass sie den Zapfen (12) des Körpers und zugleich den Zapfen (21) des Stopfens aufnimmt.
